(19)

Europäisches
Patentamt
European
Patent Office
Office européen
des brevets

(11)  **EP 4 224 575 A1**

(12)  **EUROPEAN PATENT APPLICATION**
published in accordance with Art. 153(4) EPC

(43) Date of publication:
**09.08.2023 Bulletin 2023/32**

(21) Application number: **21875132.9**

(22) Date of filing: **09.09.2021**

(51) International Patent Classification (IPC):
**H01M 4/48** *(2010.01)*       **H01M 4/62** *(2006.01)*
**H01M 10/0566** *(2010.01)*

(52) Cooperative Patent Classification (CPC):
**H01M 4/48; H01M 4/62; H01M 10/0566;**
Y02E 60/10

(86) International application number:
**PCT/JP2021/033206**

(87) International publication number:
**WO 2022/070830 (07.04.2022 Gazette 2022/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2020 JP 2020166446**

(71) Applicant: **Zeon Corporation
Tokyo 100-8246 (JP)**

(72) Inventors:
• **AKABANE Tetsuya
  Tokyo 100-8246 (JP)**
• **SONOBE Kenya
  Tokyo 100-8246 (JP)**

(74) Representative: **Maiwald GmbH
Elisenhof
Elisenstraße 3
80335 München (DE)**

(54)  **BINDER COMPOSITION FOR NONAQUEOUS SECONDARY BATTERY NEGATIVE ELECTRODES, SLURRY COMPOSITION FOR NONAQUEOUS SECONDARY BATTERY NEGATIVE ELECTRODES, NEGATIVE ELECTRODE FOR NONAQUEOUS SECONDARY BATTERIES, AND NONAQUEOUS SECONDARY BATTERY**

(57)  Provided is a binder composition for a non-aqueous secondary battery negative electrode with which it is possible to form a negative electrode having excellent peel strength and low tendency to swell after cycling and a secondary battery having excellent cycle characteristics. The binder composition contains a particulate binder and a dispersion medium. The particulate binder has a cross-linked structure through bonding via sulfur. The amount of sediment obtained upon centrifugation of the binder composition at a rotation speed of 110,000 rpm is less than 5.0 parts by mass when the amount of all solid content contained in the binder composition is taken to be 100 parts by mass.

**EP 4 224 575 A1**

**Description**

TECHNICAL FIELD

The present disclosure relates to a binder composition for a non-aqueous secondary battery negative electrode, a slurry composition for a non-aqueous secondary battery negative electrode, a negative electrode for a non-aqueous secondary battery, and a non-aqueous secondary battery.

BACKGROUND

Non-aqueous secondary batteries (hereinafter, also referred to simply as "secondary batteries") such as lithium ion secondary batteries have characteristics such as compact size, light weight, high energy density, and the ability to be repeatedly charged and discharged, and are used in a wide variety of applications. Consequently, in recent years, studies have been made to improve battery members such as electrodes for the purpose of achieving even higher non-aqueous secondary battery performance.

An electrode used in a secondary battery such as a lithium ion secondary battery normally includes a current collector and an electrode mixed material layer (positive electrode mixed material layer or negative electrode mixed material layer) formed on the current collector. This electrode mixed material layer is formed by, for example, applying a slurry composition containing an electrode active material, a binder-containing binder composition, and so forth onto the current collector, and then drying the applied slurry composition.

In recent years, attempts have been made to improve binder compositions used in the formation of negative electrode mixed material layers in order to achieve further improvement of secondary battery performance (for example, refer to Patent Literature (PTL) 1).

CITATION LIST

Patent Literature

PTL 1: JP2016-181422A

SUMMARY

(Technical Problem)

It is desirable for a binder composition that is used to form a negative electrode to cause strong close adherence of a negative electrode mixed material layer to a current collector in an obtained negative electrode (i.e., cause the negative electrode to display excellent peel strength) and also to cause a secondary battery to display excellent cycle characteristics.

Moreover, secondary battery negative electrodes have suffered from a problem of negative electrode swelling after repeated charging and discharging (after cycling) caused, for example, by collapse of electrode plate structure due to expansion and contraction of a negative electrode active material. Therefore, it is also desirable for a binder composition that is used to form a negative electrode to inhibit negative electrode swelling after cycling.

Accordingly, one object of the present disclosure is to provide a binder composition for a non-aqueous secondary battery negative electrode and a slurry composition for a non-aqueous secondary battery negative electrode with which it is possible to form a negative electrode having excellent peel strength and low tendency to swell after cycling and a secondary battery having excellent cycle characteristics.

Another object of the present disclosure is to provide a negative electrode for a non-aqueous secondary battery that has excellent peel strength while also causing a secondary battery to display excellent cycle characteristics and having low tendency to swell after cycling.

Yet another object of the present disclosure is to provide a non-aqueous secondary battery having excellent cycle characteristics.

(Solution to Problem)

The inventors conducted diligent investigation with the aim of solving the problems set forth above. The inventors discovered that it is possible to obtain a negative electrode that has excellent peel strength and low tendency to swell after cycling and a secondary battery that has excellent cycle characteristics by using a binder composition that contains a particulate binder having a structure cross-linked through sulfur as a binder and for which sediment formed after centrifugation under a specific condition is less than a specific amount. In this manner, the inventors completed the present disclosure.

Specifically, the present disclosure aims to advantageously solve the problems set forth above, and a presently disclosed binder composition for a non-aqueous secondary battery negative electrode comprises a particulate binder and a dispersion medium, wherein the particulate binder has a cross-linked structure through bonding via sulfur, and an amount of sediment obtained upon centrifugation of the binder composition for a non-aqueous secondary battery negative electrode at a rotation speed of 110,000 rpm is less than 5.0 parts by mass when the amount of all solid content contained in the binder composition for a non-aqueous secondary battery negative electrode is taken to be 100 parts by mass. By using the binder composition set forth above, it is possible to produce a negative electrode that has excellent peel strength and that also has low tendency to swell after cycling. Moreover, a secondary battery including this negative electrode displays excellent cycle characteristics.

Note that the phrase "cross-linked structure through bonding via sulfur" as used in the present disclosure means "a structure in which one atom included in a constituent polymer chain of a particulate binder and another atom included in that polymer chain and/or another constituent polymer chain of the particulate binder are linked through covalent bonding via a sulfur atom". Also note that the "covalent bonding via a sulfur atom" may be formed by just one or a plurality of sulfur atoms or may be formed by linking of one or a plurality of sulfur atoms with one or a plurality of atoms other than sulfur atoms.

The presence or absence of a "cross-linked structure through bonding via sulfur" in a particulate binder can be confirmed through X-ray absorption fine structure (XAFS) analysis, for example. Note that in a case in which an operation of extracting unreacted sulfur is performed in advance of X-ray absorption fine structure analysis, this operation can be performed by a method described in WO2019/003744A1.

The "amount of sediment" in a binder composition referred to in the present disclosure is, as described above, the "amount of sediment obtained upon centrifugation of the binder composition at a rotation speed of 110,000 rpm", and, in more detail, can be measured by a method described in the EXAMPLES section.

In the presently disclosed binder composition for a non-aqueous secondary battery negative electrode, a proportion constituted by sulfur among all solid content is preferably 0.1 mass% or more. When the proportion constituted by sulfur among all solid content is 0.1 mass% or more, peel strength of a negative electrode can be further improved while also even further inhibiting swelling of the negative electrode after cycling.

Note that the amount of "sulfur" in a binder composition referred to in the present disclosure can be measured by X-ray fluorescence analysis, and, in more detail, can be measured by a method described in the EXAMPLES section.

In the presently disclosed binder composition for a non-aqueous secondary battery negative electrode, the particulate binder preferably includes an aliphatic conjugated diene monomer unit. When the particulate binder includes an aliphatic conjugated diene monomer unit, peel strength of a negative electrode can be further improved while also even further inhibiting swelling of the negative electrode after cycling. In addition, cycle characteristics of a secondary battery can be further improved.

When a polymer such as a particulate binder is said to "include a monomer unit" in the present disclosure, this means that "a repeating unit derived from that monomer is included in a polymer obtained using the monomer".

In the presently disclosed binder composition for a non-aqueous secondary battery negative electrode, the particulate binder preferably has a gel content of not less than 40.0 mass% and not more than 99.5 mass%. When the gel content of the particulate binder is within the range set forth above, peel strength of a negative electrode can be further improved while also even further inhibiting swelling of the negative electrode after cycling. In addition, cycle characteristics of a secondary battery can be further improved.

Note that the "gel content" referred to in the present disclosure can be measured by a method described in the EXAMPLES section.

Moreover, the present disclosure aims to advantageously solve the problems set forth above, and a presently disclosed slurry composition for a non-aqueous secondary battery negative electrode comprises: a negative electrode active material; and any one of the binder compositions for a non-aqueous secondary battery negative electrode set forth above. By using a slurry composition that contains a negative electrode active material and any one of the binder compositions set forth above, it is possible to produce a negative electrode that has excellent peel strength and also has low tendency to swell after cycling. Moreover, a secondary battery including this negative electrode displays excellent cycle characteristics.

In the presently disclosed slurry composition for a non-aqueous secondary battery negative electrode, the negative electrode active material preferably includes a silicon-based negative electrode active material. Although silicon-based negative electrode active materials can improve secondary battery capacity, silicon-based negative electrode active materials have high tendency to expand and contract due to charging and discharging. However, by using the presently disclosed slurry composition, it is possible to sufficiently inhibit swelling of a negative electrode after cycling even in a situation in which a silicon-based negative electrode active material is used.

In the presently disclosed slurry composition for a non-aqueous secondary battery negative electrode, a proportion constituted by the silicon-based negative electrode active material among the negative electrode active material is preferably not less than 1 mass% and not more than 50 mass%. When the proportion constituted by the silicon-based negative electrode active material among the negative electrode active material is within the range set forth above, the capacity of a secondary battery can be sufficiently improved while also even further inhibiting swelling of a negative electrode after cycling.

Furthermore, the present disclosure aims to advantageously solve the problems set forth above, and a presently disclosed non-aqueous secondary battery comprises a positive electrode, a negative electrode, a separator, and an electrolyte solution, wherein the negative electrode is the negative electrode for a non-aqueous secondary battery set forth above. The presently disclosed secondary battery has excellent cycle characteristics.

(Advantageous Effect)

According to the present disclosure, it is possible to provide a binder composition for a non-aqueous secondary battery negative electrode and a slurry composition for a non-aqueous secondary battery negative electrode with which it is possible to form a negative electrode having excellent peel strength and low tendency to swell after cycling and a secondary battery having excellent cycle characteristics.

Moreover, according to the present disclosure, it is possible to provide a negative electrode for a non-aqueous secondary battery that has excellent peel strength while also causing a secondary battery to display excellent cycle characteristics and having low tendency to swell after cycling.

Furthermore, according to the present disclosure, it is possible to provide a non-aqueous secondary battery having excellent cycle characteristics.

DETAILED DESCRIPTION

The following provides a detailed description of embodiments of the present disclosure.

The presently disclosed binder composition for a non-aqueous secondary battery negative electrode can be used in production of the presently disclosed slurry composition for a non-aqueous secondary battery negative electrode. Moreover, a slurry composition for a non-aqueous secondary battery negative electrode that is produced using the presently disclosed binder composition for a non-aqueous secondary battery negative electrode can be used in production of a negative electrode of a non-aqueous secondary battery such as a lithium ion secondary battery. Furthermore, a feature of the presently disclosed non-aqueous secondary battery is that it includes the presently disclosed negative electrode for a non-aqueous secondary battery, which is produced using the presently disclosed slurry composition for a non-aqueous secondary battery negative electrode.

(Binder composition for non-aqueous secondary battery negative electrode)

The presently disclosed binder composition contains a particulate binder and a dispersion medium, and may optionally further contain other components that can be contained in binder compositions.

Features of the presently disclosed binder composition are that the particulate binder has a cross-linked structure through bonding via sulfur and that the amount of sediment obtained upon centrifugation of the binder composition at a rotation speed of 110,000 rpm is less than 5.0 parts by mass relative to 100 parts by mass of the amount of all solid content in the binder composition.

By using the presently disclosed binder composition, it is possible to obtain a negative electrode that has excellent peel strength and low tendency to swell after cycling and a secondary battery that has excellent cycle characteristics.

Although the reason that a negative electrode having excellent peel strength and low tendency to swell after cycling and a secondary battery having excellent cycle characteristics can be produced through the presently disclosed binder composition is not certain, the reason is presumed to be as follows.

First, the particulate binder that is contained in the presently disclosed binder composition has a cross-linked structure through bonding via sulfur. Flexibility and adhesiveness of a negative electrode mixed material layer both increase through the contribution of this cross-linked structure via sulfur, and thus a negative electrode can be caused to display excellent peel strength. Moreover, the excellent flexibility and adhesiveness of the negative electrode mixed material layer mean that collapse of electrode plate structure has low tendency to occur even upon repeated expansion and contraction of a negative electrode active material due to charging and discharging, and thus swelling of the negative electrode can be inhibited.

Furthermore, studies conducted by the inventors revealed that in a binder composition containing a particulate binder having a cross-linked structure such as described above, the presence of a large amount of high specific gravity components that are free in the dispersion medium without being incorporated into the particulate binder (i.e., are independent of the particulate binder) may result in deterioration of cycle characteristics of a secondary battery. One example of such a high specific gravity component is a sulfuric cross-linker that has been added for formation of a cross-linked structure but has not been used up in a cross-linking reaction (i.e., residual sulfuric cross-linker).

Separation of components by centrifugation at extremely high speed (ultracentrifugation) can be adopted as a method for estimating the amount of high specific gravity components contained in a binder composition. The presently disclosed binder composition can be said to contain few high specific gravity components such as residual sulfuric cross-linker described above because the amount of sediment obtained upon centrifugation of the presently disclosed binder composition at a rotation speed of 110,000 rpm is small at less than 5.0 parts by mass relative to 100 parts by mass of the amount of all solid content. Consequently, a negative electrode having a negative electrode mixed material layer formed using the presently disclosed binder composition can cause a secondary battery to display excellent cycle characteristics.

<Particulate binder>

The particulate binder is a particulate polymer that functions as a binder and that in a negative electrode mixed material layer formed using a slurry composition containing the binder composition, holds components such as a negative electrode active material so that these components do not detach from the negative electrode mixed material layer.

The particulate binder is normally water-insoluble. Note that when a component is referred to as "water-insoluble" in the present disclosure, this means that when 0.5 g of the component is dissolved in 100 g of water at a temperature of 25°C, insoluble content is 90 mass% or more.

«Cross-linked structure of particulate binder»

The particulate binder has a cross-linked structure through bonding via sulfur as previously described. It is preferable that a sulfuric cross-linker is used to introduce covalent bonding via a sulfur atom and form the cross-linked structure. In other words, the "cross-linked structure through bonding via sulfur" in the particulate binder is preferably derived from a sulfuric cross-linker.

[Sulfuric cross-linker]

The sulfuric cross-linker may be sulfur; a thiazole-based cross-linker such as 2-(morpholinodithio)benzothiazole; a thiuram-based cross-linker such as tetramethylthiuram disulfide, tetraethylthiuram disulfide, tetrabutylthiuram disulfide, or dipentamethylenethiuram tetrasulfide; p-quinone dioxime; p,p'-dibenzoylquinone dioxime; 4,4'-dithiodimorpholine; dithiodicaprolactam; poly-p-dinitrosobenzene; or N,N'-m-phenylenedimaleimide, for example. One of these sulfuric cross-linkers may be used individually, or two or more of these sulfuric cross-linkers may be used in combination. Of these sulfuric cross-linkers, sulfur is preferable from a viewpoint of further improving peel strength of a negative electrode while also even further inhibiting swelling of the negative electrode after cycling and further enhancing cycle characteristics of a secondary battery.

The average particle diameter of the sulfur is preferably 50 $\mu$m or less, and more preferably 3 $\mu$m or less. Note that the average particle diameter of the sulfur may be 0.5 $\mu$m or more, for example, but is not specifically limited thereto.

The "average particle diameter" of the sulfur is the particle diameter (D50) at which, in a particle diameter distribution (by volume) measured by laser diffraction, cumulative volume calculated from a small diameter end of the distribution reaches 50%, and can be measured using a laser diffraction particle diameter distribution analyzer.

Formation of a cross-linked structure by the sulfuric cross-linker can be performed by a method subsequently described in the "Production method of binder composition" section.

«Chemical composition of particulate binder»

Although no specific limitations are placed on the chemical composition of the particulate binder, it is preferable that the particulate binder includes an aliphatic conjugated diene monomer unit. Since an aliphatic conjugated diene monomer unit can function well as a starting point for cross-linking, the inclusion of an aliphatic conjugated diene monomer unit in the particulate binder makes it possible to further improve peel strength of a negative electrode while also even further inhibiting swelling of the negative electrode after cycling. In addition, cycle characteristics of a secondary battery can be further improved.

[Aliphatic conjugated diene monomer unit]

Examples of aliphatic conjugated diene monomers that can form an aliphatic conjugated diene monomer unit in the particulate binder include 1,3-butadiene, 2-methyl-1,3-butadiene (isoprene), and 2,3-dimethyl-1,3-butadiene. One of these aliphatic conjugated diene monomers may be used individually, or two or more of these aliphatic conjugated diene monomers may be used in combination. Of these aliphatic conjugated diene monomers, 1,3-butadiene and isoprene are preferable from a viewpoint of further improving peel strength of a negative electrode while also even further inhibiting swelling of the negative electrode after cycling and further enhancing cycle characteristics of a secondary battery.

The proportion constituted by aliphatic conjugated diene monomer units in the particulate binder when the amount of all monomer units in the particulate binder is taken to be 100 mass% is preferably not less than 10 mass% and not more than 100 mass%, more preferably not less than 20 mass% and not more than 100 mass%, and even more preferably not less than 30 mass% and not more than 100 mass%. When the proportion constituted by aliphatic conjugated diene monomer units in the particulate binder is within any of the ranges set forth above, peel strength of a negative electrode can be further improved while also even further inhibiting swelling of the negative electrode after cycling and further enhancing cycle characteristics of a secondary battery.

Note that the "proportion" constituted by each "monomer unit" in a polymer such as a particulate binder referred to in the present disclosure can be measured by a nuclear magnetic resonance (NMR) method such as $^1$H-NMR or $^{13}$C-NMR.

[Examples of particulate binder including aliphatic conjugated diene monomer unit]

The particulate binder including an aliphatic conjugated diene monomer unit may, for example, be an aliphatic conjugated diene polymer such as polybutadiene or polyisoprene; an aromatic vinyl-aliphatic conjugated diene copolymer such as a styrene-butadiene polymer (SBR) or a styrene-butadiene-styrene block copolymer (SBS); or a vinyl cyanide-aliphatic conjugated diene copolymer such as an acrylonitrile-butadiene polymer (NBR). One of these polymers may be used individually, or two or more of these polymers may be used in combination. Of these polymers, polyisoprene and an aromatic vinyl-aliphatic conjugated diene copolymer are preferable.

The following describes one example of a suitable chemical composition for an aromatic vinyl-aliphatic conjugated diene copolymer such as SBR.

The aromatic vinyl-aliphatic conjugated diene copolymer includes an aliphatic conjugated diene monomer unit and an aromatic vinyl monomer unit, and may optionally include other monomer units.

Examples of aliphatic conjugated diene monomers that can form an aliphatic conjugated diene monomer unit in the aromatic vinyl-aliphatic conjugated diene copolymer include the same aliphatic conjugated diene monomers as previously described as "aliphatic conjugated diene monomers that can form an aliphatic conjugated diene monomer unit in the particulate binder". One of these aliphatic conjugated diene monomers may be used individually, or two or more of these aliphatic conjugated diene monomers may be used in combination. Of these aliphatic conjugated diene monomers, 1,3-butadiene and isoprene are preferable from a viewpoint of further improving peel strength of a negative electrode while also even further inhibiting swelling of the negative electrode after cycling and further enhancing cycle characteristics of a secondary battery.

The proportion constituted by aliphatic conjugated diene monomer units in the aromatic vinyl-aliphatic conjugated diene copolymer when the amount of all monomer units in the aromatic vinyl-aliphatic conjugated diene copolymer is taken to be 100 mass% is preferably 10 mass% or more, more preferably 20 mass% or more, and even more preferably 30 mass% or more, and is preferably 70 mass% or less, more preferably 60 mass% or less, and even more preferably 50 mass% or less. When the proportion constituted by aliphatic conjugated diene monomer units in the aromatic vinyl-aliphatic conjugated diene copolymer is within any of the ranges set forth above, peel strength of a negative electrode can be further improved while also even further inhibiting swelling of the negative electrode after cycling and further enhancing cycle characteristics of a secondary battery.

Examples of aromatic vinyl monomers that can form an aromatic vinyl monomer unit in the aromatic vinyl-aliphatic conjugated diene copolymer include styrene, α-methylstyrene, vinyltoluene, and divinylbenzene. One of these aromatic vinyl monomers may be used individually, or two or more of these aromatic vinyl monomers may be used in combination. Of these aromatic vinyl monomers, styrene is preferable.

The proportion constituted by aromatic vinyl monomer units in the aromatic vinyl-aliphatic conjugated diene copolymer when the amount of all monomer units in the aromatic vinyl-aliphatic conjugated diene copolymer is taken to be 100 mass% is preferably 40 mass% or more, more preferably 50 mass% or more, and even more preferably 60 mass% or more, and is preferably 90 mass% or less, more preferably 80 mass% or less, and even more preferably 70 mass% or less.

Preferable examples of other monomer units that can optionally be included in the aromatic vinyl-aliphatic conjugated diene copolymer include an acidic group-containing monomer unit and a hydroxy group-containing monomer unit.

Examples of acidic group-containing monomers that can form an acidic group-containing monomer unit in the aromatic vinyl-aliphatic conjugated diene copolymer include carboxy group-containing monomers, sulfo group-containing monomers, and phosphate group-containing monomers.

Examples of carboxy group-containing monomers include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, and α-chloro-β-E-methoxyacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

An acid anhydride that produces a carboxy group through hydrolysis can also be used as a carboxy group-containing monomer.

Examples of sulfo group-containing monomers include styrene sulfonic acid, vinyl sulfonic acid, methyl vinyl sulfonic acid, (meth)allyl sulfonic acid, and 3-allyloxy-2-hydroxypropane sulfonic acid.

Note that in the present disclosure, "(meth)allyl" is used to indicate "allyl" and/or "methallyl".

Examples of phosphate group-containing monomers include 2-(meth)acryl oyl oxyethyl phosphate, methyl-2-(meth)acryloyloxyethyl phosphate, and ethyl-(meth)acryloyloxyethyl phosphate.

Note that in the present disclosure, "(meth)acryloyl" is used to indicate "acryloyl" and/or "methacryloyl".

One acidic group-containing monomer may be used individually, or two or more acidic group-containing monomers may be used in combination. Moreover, a carboxy group-containing monomer is preferable, and methacrylic acid is more preferable as an acidic group-containing monomer. In other words, the aromatic vinyl-aliphatic conjugated diene copolymer preferably includes a carboxy group-containing monomer unit, and more preferably includes a methacrylic acid unit.

The proportion constituted by acidic group-containing monomer units in the aromatic vinyl-aliphatic conjugated diene copolymer when the amount of all monomer units in the aromatic vinyl-aliphatic conjugated diene copolymer is taken to be 100 mass% is preferably 0.5 mass% or more, more preferably 1 mass% or more, and even more preferably 2 mass% or more, and is preferably 10 mass% or less, more preferably 8 mass% or less, and even more preferably 6 mass% or less.

Examples of hydroxy group-containing monomers that can form a hydroxy group-containing monomer unit in the aromatic vinyl-aliphatic conjugated diene copolymer include ethylenically unsaturated alcohols such as (meth)allyl alcohol, 3-buten-1-ol, and 5-hexen-1-ol; alkanol esters of ethylenically unsaturated carboxylic acids such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of (meth)acrylic acid and polyalkylene glycol represented by a general formula $CH_2=CR^1\text{-}COO\text{-}(C_qH_{2q}O)_p\text{-}H$ (where p represents an integer of 2 to 9, q represents an integer of 2 to 4, and $R^1$ represents hydrogen or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether. One of these hydroxy group-containing monomers may be used individually, or two or more of these hydroxy group-containing monomers may be used in combination. Of these hydroxy group-containing monomers, 2-hydroxyethyl acrylate is preferable.

Note that in the present disclosure, "(meth)acryl" is used to indicate "acryl" and/or "methacryl".

The proportion constituted by hydroxy group-containing monomer units in the aromatic vinyl-aliphatic conjugated diene copolymer when the amount of all monomer units in the aromatic vinyl-aliphatic conjugated diene copolymer is taken to be 100 mass% is preferably 0.1 mass% or more, and more preferably 0.5 mass% or more, and is preferably 5 mass% or less, and more preferably 3 mass% or less.

«Gel content of particulate binder»

The gel content of the particulate binder is preferably 40.0 mass% or more, more preferably 50.0 mass% or more, even more preferably 60.0 mass% or more, and particularly preferably 65.0 mass% or more, and is preferably 99.5 mass% or less. When the gel content of the particulate binder is within any of the ranges set forth above, peel strength of a negative electrode can be further improved while also even further inhibiting swelling of the negative electrode after cycling. In addition, cycle characteristics of a secondary battery can be further improved.

Note that the "gel content" of the particulate binder can be controlled by altering the types and amounts of monomers used to produce the particulate binder, the polymerization conditions of the particulate binder (polymerization temperature, types and amounts of polymerization initiator and chain transfer agent, etc.), and the cross-linking conditions during cross-linking of the particulate binder (reaction temperature, reaction time, types and amounts of cross-linker, cross-linking accelerator, and auxiliary cross-linking accelerator, etc.), for example.

<Dispersion medium>

Any known dispersion medium can be used as the dispersion medium in the presently disclosed binder composition without any specific limitations so long as the particulate binder described above can be dispersed therein. One type of dispersion medium may be used individually, or two or more types of dispersion mediums may be used in combination. Moreover, water is preferable as the dispersion medium.

<Other components>

No specific limitations are placed on components other than the particulate binder and the dispersion medium that can optionally be contained in the presently disclosed binder composition. For example, the binder composition can contain a binder other than the above-described particulate binder having a specific cross-linked structure (for example, a particulate binder not having the specific cross-linked structure or a water-soluble polymer). Moreover, the binder composition may contain residual sulfuric cross-linker such as previously described and may contain a subsequently described vulcanization accelerator and auxiliary vulcanization accelerator that are used in a subsequently described cross-linking reaction.

<Amount of sediment>

The amount of sediment obtained upon centrifugation of the presently disclosed binder composition at a rotation speed of 110,000 rpm is required to be less than 5.0 parts by mass when the amount of all solid content contained in the binder composition prior to centrifugation is taken to be 100 parts by mass, and is preferably less than 3.0 parts by mass, and more preferably less than 2.5 parts by mass. In a situation in which the amount of sediment is 5 parts by mass or more relative to 100 parts by mass of the binder composition prior to centrifugation, it is not possible to cause a secondary battery to display excellent cycle characteristics. Note that the amount of sediment is 0 parts by mass or more relative to 100 parts by mass of the amount of all solid content contained in the binder composition prior to centrifugation, and can be set as 0.1 parts by mass or more, for example.

The "amount of sediment" obtained upon centrifugation of the binder composition at a rotation speed of 110,000 rpm can be reduced by reducing high specific gravity components (for example, residual sulfuric cross-linker such as previously described) in the binder composition, for example.

<Proportion of sulfur>

In the presently disclosed binder composition, the amount of sulfur as measured by X-ray fluorescence analysis when the amount of all solid content is taken to be 100 mass% is preferably 0.1 mass% or more, and more preferably 0.2 mass% or more, and is preferably 5.0 mass% or less, more preferably 3.0 mass% or less, even more preferably 1.9 mass% or less, and particularly preferably 1.4 mass% or less. When the proportion constituted by sulfur among all solid content is 0.1 mass% or more, peel strength of a negative electrode can be further improved while also even further inhibiting swelling of the negative electrode after cycling. On the other hand, when the proportion constituted by sulfur among all solid content is 5.0 mass% or less, the cross-linked structure of the particulate binder does not become excessively rigid, flexibility of a negative electrode is ensured, and peel strength of the negative electrode can be sufficiently ensured.

Note that the "proportion constituted by sulfur among all solid content" in the binder composition can be controlled by adjusting the additive amount of sulfuric cross-linker, for example.

<Production method of binder composition>

No specific limitations are placed on the method by which the presently disclosed binder composition is produced. For example, the presently disclosed binder composition can be produced through a step of preparing a water dispersion of a particulate binder (preparation step), a step of adding a sulfuric cross-linker to the water dispersion and performing cross-linking of the particulate binder (cross-linking step), and a step of optionally purifying the water dispersion containing the cross-linked particulate binder (purification step).

<<Preparation step>>

In the preparation step, a water dispersion of a particulate binder is prepared. No specific limitations are placed on the method by which the water dispersion of the particulate binder is prepared. For example, the water dispersion of the particulate binder may be prepared through the purchase of a commercially available product, may be produced by dispersing a commercially available dry polymer in water, may be produced through polymerization of monomers in water, or may be produced through polymerization of monomers in an organic solvent and subsequent solvent exchange with water.
The method by which polymerization of monomers in water is performed to produce a water dispersion of a particulate binder is not specifically limited and may be a method in which a monomer composition containing the previously described monomers is polymerized in water by a known method.
The proportion constituted by each monomer in the monomer composition is normally the same as the proportion constituted by each monomer unit in the target particulate binder. The method of polymerization of the particulate binder is not specifically limited and may be any of solution polymerization, suspension polymerization, bulk polymerization, emulsion polymerization, or the like, for example. Moreover, the polymerization reaction may be addition polymerization such as ionic polymerization, radical polymerization, or living radical polymerization. An emulsifier, dispersant, polymerization initiator, polymerization aid, or the like used in polymerization may be the same as typically used and the amount thereof may also be the same as typically used.

«Cross-linking step»

In the cross-linking step, a sulfuric cross-linker is added to the water dispersion of the particulate binder obtained in the preparation step and cross-linking of the particulate binder is performed. This cross-linking reaction enables introduction of a cross-linked structure through bonding via sulfur into the particulate binder. Note that it is preferable that a vulcanization accelerator and/or auxiliary vulcanization accelerator is added to the water dispersion in addition to the sulfuric cross-linker in the cross-linking step.

[Sulfuric cross-linker]

The sulfuric cross-linker can be any of those that were previously described in the "Cross-linked structure of particulate binder" section.
The additive amount of the sulfuric cross-linker is preferably 0.1 parts by mass or more, more preferably 0.5 parts by mass or more, and even more preferably 1.0 parts by mass or more per 100 parts by mass of the (pre-cross-linking) particulate binder contained in the water dispersion, and is preferably 10 parts by mass or less, more preferably 7 parts by mass or less, and even more preferably 4 parts by mass or less per 100 parts by mass of the (pre-cross-linking) particulate binder contained in the water dispersion.

[Vulcanization accelerator and auxiliary vulcanization accelerator]

The vulcanization accelerator and auxiliary vulcanization accelerator that can optionally be added are not specifically limited, and known examples thereof can be used. Also note that the vulcanization accelerator and the auxiliary vulcanization accelerator may each be one type thereof used individually, or two or more types thereof used in combination. The vulcanization accelerator is preferably zinc dibutyldithiocarbamate, and the auxiliary vulcanization accelerator is preferably zinc oxide.
The additive amount of the vulcanization accelerator is preferably 0.1 parts by mass or more, more preferably 0.5 parts by mass or more, and even more preferably 1.0 parts by mass or more per 100 parts by mass of the (pre-cross-linking) particulate binder contained in the water dispersion, and is preferably 10 parts by mass or less, more preferably 7 parts by mass or less, and even more preferably 4 parts by mass or less per 100 parts by mass of the (pre-cross-linking) particulate binder contained in the water dispersion.
The additive amount of the auxiliary vulcanization accelerator is preferably 0.1 parts by mass or more, more preferably 0.5 parts by mass or more, and even more preferably 1.0 parts by mass or more per 100 parts by mass of the (pre-cross-linking) particulate binder contained in the water dispersion, and is preferably 10 parts by mass or less, more preferably 7 parts by mass or less, and even more preferably 4 parts by mass or less per 100 parts by mass of the (pre-cross-linking) particulate binder contained in the water dispersion.

[Conditions of cross-linking reaction]

The reaction conditions during cross-linking of the particulate binder by the above-described sulfuric cross-linker are not specifically limited so long as there is sufficient progression of cross-linking of the particulate binder.

The reaction temperature during cross-linking is preferably 10°C or higher, and more preferably 20°C or higher, and is preferably 50°C or lower, and more preferably 40°C or lower, for example.

The reaction time during cross-linking is preferably 1 hour or more, more preferably 10 hours or more, and even more preferably 50 hours or more, and is preferably 300 hours or less, more preferably 200 hours or less, and even more preferably 150 hours or less, for example.

«Purification step»

In the optionally performed purification step, unnecessary components are removed from the water dispersion that has undergone the cross-linking step. These unnecessary components are components that are contained in the water dispersion after the cross-linking step and that cannot contribute to improvement of battery characteristics or the like. Examples of such unnecessary components include sulfuric cross-linker, vulcanization accelerator, and auxiliary vulcanization accelerator that are free in the dispersion medium without being incorporated into the particulate binder (without being consumed in the cross-linking reaction). Removal of such unnecessary components makes it possible to reduce the previously described "amount of sediment" in the binder composition.

Although no specific limitations are placed on the purification method so long as the above-described unnecessary components can be removed, centrifugal separation is preferable in a case in which the unnecessary components are high specific gravity components. A centrifuge that is used in the centrifugal separation may be a known device without any specific limitations. Moreover, the conditions of the centrifugal separation can be set as appropriate without any specific limitations so long as unnecessary components (high specific gravity components) can be separated from the particulate binder and the dispersion medium.

Moreover, in a case in which the unnecessary components are high specific gravity components, the high specific gravity components may be removed through phase separation by settling.

Note that although centrifugal separation can be adopted as the purification method, it is not appropriate to adopt ultracentrifugation such as used in determination of the "amount of sediment" in the EXAMPLES section, for example. This is because adopting ultracentrifugation as the purification method may cause the particulate binder to coalesce and not redisperse.

(Slurry composition for non-aqueous secondary battery negative electrode)

The presently disclosed slurry composition is a composition that is used in an application of forming a negative electrode mixed material layer of a negative electrode, that contains the binder composition set forth above, and that further contains a negative electrode active material. In other words, the presently disclosed slurry composition contains the previously described particulate binder having a cross-linked structure and a dispersion medium, and optionally further contains other components. As a result of the presently disclosed slurry composition being produced using the binder composition set forth above, a negative electrode that includes a negative electrode mixed material layer formed using the slurry composition has excellent peel strength and can inhibit swelling after cycling. Moreover, this negative electrode can cause a secondary battery to display excellent cycle characteristics.

<Binder composition>

The presently disclosed binder composition set forth above is used as a binder composition.

No specific limitations are placed on the amount of the binder composition in the slurry composition. For example, the amount of the binder composition can be set as an amount such that the amount of the particulate binder having the specific cross-linked structure is not less than 0.5 parts by mass and not more than 10 parts by mass in terms of solid content per 100 parts by mass of the negative electrode active material.

<Negative electrode active material>

The negative electrode active material is a material that gives and receives electrons in a negative electrode of a non-aqueous secondary battery. In the case of a negative electrode active material for a lithium ion secondary battery, for example, a material that can occlude and release lithium is typically used.

The presently disclosed slurry composition preferably contains a silicon-based negative electrode active material as the negative electrode active material. This is because a silicon-based negative electrode active material can improve the capacity of a secondary battery. On the other hand, silicon-based negative electrode active materials have high tendency to expand and contract due to charging and discharging. However, since the presently disclosed slurry composition is produced using the binder composition set forth above, it is possible to sufficiently inhibit swelling of a negative electrode after cycling even in a situation in which a silicon-based negative electrode active material is used.

«Silicon-based negative electrode active material»

The silicon-based negative electrode active material may be silicon (Si), a silicon-containing alloy, SiO, $SiO_x$, a composite material of conductive carbon and a Si-containing material obtained by coating or combining the Si-containing material with the conductive carbon, or the like, for example. One of these silicon-based negative electrode active materials may be used individually, or two or more of these silicon-based negative electrode active materials may be used in combination.

The silicon-containing alloy may, for example, be an alloy composition that contains silicon and one or more elements selected from the group consisting of titanium, iron, cobalt, nickel, and copper.

Alternatively, the silicon-containing alloy may, for example, be an alloy composition that contains silicon, aluminum, and a transition metal such as iron, and further contains rare-earth elements such as tin and yttrium.

$SiO_x$ is a compound containing Si and at least one of SiO and $SiO_2$, where x is normally not less than 0.01 and less than 2. $SiO_x$ can be formed, for example, by utilizing a disproportionation reaction of silicon monoxide (SiO). Specifically, $SiO_x$ can be prepared by heat-treating SiO, optionally in the presence of a polymer such as polyvinyl alcohol, to produce silicon and silicon dioxide. After SiO has optionally been pulverized and mixed with the polymer, the heat treatment can be performed at a temperature of 900°C or higher, and preferably 1000°C or higher, in an atmosphere containing organic gas and/or vapor.

The composite material of a Si-containing material and conductive carbon may, for example, be a compound obtained by heat-treating a pulverized mixture of SiO, a polymer such as polyvinyl alcohol, and optionally a carbon material in an atmosphere containing organic gas and/or vapor, for example. The composite material can alternatively be obtained by a commonly known method such as a method in which organic gas or the like is used to surface coat particles of SiO by chemical vapor deposition or a method in which particles of SiO and graphite or artificial graphite are formed into composite particles (granulated) by a mechanochemical method.

From a viewpoint of increasing the capacity of a secondary battery, the silicon-based negative electrode active material is preferably a silicon-containing alloy or $SiO_x$.

The proportion constituted by the silicon-based negative electrode active material among the negative electrode active material is preferably not less than 1 mass% and not more than 50 mass% when the entire negative electrode active material is taken to be 100 mass%. When the proportion constituted by the silicon-based negative electrode active material among the negative electrode active material is within the range set forth above, the capacity of a secondary battery can be further improved while also even further inhibiting swelling of a negative electrode after cycling.

<<Other negative electrode active materials»

A carbon-based negative electrode active material can, for example, preferably be used as a negative electrode active material other than the silicon-based negative electrode active material described above. In other words, the negative electrode active material is preferably a mixture of a silicon-based negative electrode active material and a carbon-based negative electrode active material.

The carbon-based negative electrode active material can be defined as an active material that has carbon as its main framework and into which lithium can be inserted (also referred to as "doping"). Examples of the carbon-based negative electrode active material include carbonaceous materials and graphitic materials.

A carbonaceous material is a material with a low degree of graphitization (i.e., low crystallinity) that can be obtained by carbonizing a carbon precursor by heat treatment at 2000°C or lower. The lower limit of the heat treatment temperature in the carbonization is not specifically limited and may be 500°C or higher, for example.

Examples of the carbonaceous material include graphitizing carbon whose carbon structure can easily be changed according to the heat treatment temperature and non-graphitizing carbon typified by glassy carbon, which has a structure similar to an amorphous structure.

The graphitizing carbon may be a carbon material made using tar pitch obtained from petroleum or coal as a raw material, for example. Specific examples of graphitizing carbon include coke, mesocarbon microbeads (MCMB), mesophase pitch-based carbon fiber, and pyrolytic vapor-grown carbon fiber.

Examples of the non-graphitizing carbon include pyrolyzed phenolic resin, polyacrylonitrile-based carbon fiber, quasi-isotropic carbon, pyrolyzed furfuryl alcohol resin (PFA), and hard carbon.

The graphitic material is a material having high crystallinity of a similar level to graphite. The graphitic material can be obtained by heat-treating graphitizing carbon at 2000°C or higher. The upper limit of the heat treatment temperature is not specifically limited and may be 5000°C or lower, for example.

Examples of the graphitic material include natural graphite and artificial graphite.

Examples of the artificial graphite include artificial graphite obtained by heat-treating carbon containing graphitizing carbon mainly at 2800°C or higher, graphitized MCMB obtained by heat-treating MCMB at 2000°C or higher, and graphitized mesophase pitch-based carbon fiber obtained by heat-treating mesophase pitch-based carbon fiber at 2000°C or higher.

<Other components>

Examples of other components that can be contained in the slurry composition include known components such as thickeners without any specific limitations. One other component may be used individually, or two or more other components may be used in combination.

<Production of slurry composition>

No specific limitations are placed on the method by which the slurry composition is produced.

For example, the slurry composition can be produced by mixing the binder composition, the negative electrode active material, and other components that are used as necessary in the presence of a dispersion medium.

Note that the dispersion medium used in production of the slurry composition may just include the dispersion medium that was contained in the binder composition, or a dispersion medium may be newly added in production of the slurry composition. The method of mixing is not specifically limited, and the mixing can be performed using a typically used stirrer or disperser.

(Negative electrode for non-aqueous secondary battery)

The presently disclosed negative electrode includes a negative electrode mixed material layer formed using the slurry composition for a non-aqueous secondary battery negative electrode set forth above. Consequently, the negative electrode mixed material layer is formed of a dried product of the slurry composition set forth above and normally contains at least a negative electrode active material and a component derived from a particulate binder having a specific cross-linked structure. It should be noted that components contained in the negative electrode mixed material layer are components that were contained in the slurry composition set forth above and that the preferred ratio of these components in the negative electrode mixed material layer is the same as the preferred ratio of these components in the slurry composition. Also note that although the particulate binder is present in a particulate form in the slurry composition, the particulate binder may have a particulate form or any other form in the negative electrode mixed material layer that is formed using the slurry composition.

The presently disclosed negative electrode has excellent peel strength as a result of the negative electrode mixed material layer being formed using the slurry composition set forth above. In addition, swelling after cycling is inhibited in this negative electrode, and a secondary battery can be caused to display excellent cycle characteristics through the negative electrode.

<Production of negative electrode for non-aqueous secondary battery>

The negative electrode mixed material layer of the presently disclosed negative electrode for a non-aqueous secondary battery can be formed by any of the methods described below, for example.

(1) A method in which the presently disclosed slurry composition is applied onto the surface of a current collector and is then dried

(2) A method in which a current collector is immersed in the presently disclosed slurry composition and is then dried

(3) A method in which the presently disclosed slurry composition is applied onto a releasable substrate and is dried to produce a negative electrode mixed material layer that is then transferred onto the surface of a current collector

Of these methods, method (1) is particularly preferable since it allows simple control of the thickness of the negative electrode mixed material layer. In more detail, method (1) includes a step of applying the slurry composition onto a current collector (application step) and a step of drying the slurry composition that has been applied onto the current collector so as to form a negative electrode mixed material layer on the current collector (drying step).

«Application step»

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the negative electrode mixed material layer that is to be obtained through drying.

The current collector onto which the slurry composition is applied is a material having electrical conductivity and electrochemical durability. Specifically, the current collector may, for example, be made of iron, copper, aluminum, nickel, stainless steel, titanium, tantalum, gold, platinum, or the like. Of these materials, copper foil is particularly preferable as a current collector used for a negative electrode. One of these materials may be used individually, or two or more of these materials may be used in combination in a freely selected ratio.

«Drying step»

The slurry composition on the current collector may be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector in this manner, a negative electrode mixed material layer can be formed on the current collector to thereby obtain a negative electrode that includes the current collector and the negative electrode mixed material layer.

After the drying step, the negative electrode mixed material layer may be further subjected to a pressing process such as mold pressing or roll pressing. This pressing process can further improve peel strength of the negative electrode and enables densification of the obtained negative electrode mixed material layer.

(Non-aqueous secondary battery)

The presently disclosed secondary battery includes a positive electrode, a negative electrode, an electrolyte solution, and a separator, and has the presently disclosed negative electrode for a non-aqueous secondary battery set forth above as the negative electrode. The presently disclosed secondary battery has excellent cycle characteristics as a result of including the presently disclosed negative electrode for a non-aqueous secondary battery.

Although the following describes, as one example, a case in which the secondary battery is a lithium ion secondary battery, the presently disclosed secondary battery is not limited to the following example.

<Positive electrode>

Examples of positive electrodes that can be used in the presently disclosed secondary battery include known positive electrodes used in production of secondary batteries without any specific limitations. Specifically, a positive electrode that is obtained by forming a positive electrode mixed material layer on a current collector by a known production method, or the like, can be used.

<Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that can be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable as they readily dissolve in solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

No specific limitations are placed on the organic solvent used in the electrolyte solution so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution may be adjusted as appropriate. Furthermore, known additives may be added to the electrolyte solution.

<Separator>

Examples of separators that can be used include, but are not specifically limited to, those described in JP2012-204303A. Of these separators, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

<Production method of secondary battery>

The presently disclosed secondary battery can be produced by, for example, stacking the positive electrode and the negative electrode with the separator in-between, performing rolling, folding, or the like of the resultant laminate in accordance with the battery shape, as necessary, to place the laminate in a battery container, injecting the electrolyte solution into the battery container, and sealing the battery container. Note that in the presently disclosed secondary battery, the presently disclosed negative electrode for a non-aqueous secondary battery set forth above is used as the negative electrode. The presently disclosed secondary battery may be provided with an overcurrent preventing device such as a fuse or a PTC device; an expanded metal; a lead plate; or the like, as necessary, in order to prevent pressure increase inside the secondary battery and occurrence of overcharging or overdischarging. The shape of the secondary battery may be a coin type, button type, sheet type, cylinder type, prismatic type, flat type, or the like, for example.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative examples, the following methods were used to evaluate the amount of sediment obtained upon centrifugation of a binder composition, the proportion constituted by sulfur among all solid content in a binder composition, the gel content of a particulate binder, the peel strength of a negative electrode, the cycle characteristics of a secondary battery, and the inhibition of swelling of a negative electrode after cycling.

<Amount of sediment>

A binder composition was subjected to centrifugation using an ultracentrifuge (produced by Eppendorf Himac Technologies Co., Ltd.; product name: CF120FNX) under conditions of an S110AT rotor, a maximum centrifugal acceleration at the maximum rotation radius (5.11 cm) of 691,000 ×g, a rotation speed of 110,000 rpm, and a rotation time of 15 minutes. The binder composition present after centrifugation had separated into three layers (upper layer: particulate binder; middle layer: water; lower layer: sediment). The lower layer was collected, was dried in an environment having a humidity of 50% and a temperature of 23°C to 25°C for 16 hours, and was subsequently dried in a vacuum dryer for 10 hours. The mass of the obtained dried product (sediment) was measured. The amount of sediment was calculated by taking the mass of all solid content in the binder composition prior to centrifugation to be 100 parts by mass.

<Proportion of sulfur>

A binder composition was dried in an environment having a humidity of 50% and a temperature of 23°C to 25°C to form a deposition film of 500 ± 150 μm in thickness, and this deposition film was taken to be a measurement sample. The amount of sulfur contained in the measurement sample was measured by X-ray fluorescence analysis using a standard material of known sulfur content. The proportion constituted by sulfur among all solid content in the binder composition was calculated by taking the mass of all solid content (i.e., the mass of the deposition film used as a measurement sample) to be 100 mass%.

<Gel content>

A binder composition was dried in an environment having a humidity of 50% and a temperature of 23°C to 25°C to form a deposition film of 1 ± 0.3 mm in thickness. The deposition film was then dried in a vacuum dryer having a temperature of 60°C for 24 hours. Thereafter, the dried film was cut to a square piece of 3 mm to 5 mm in length, and the mass of this piece, which was approximately 1 g, was precisely weighed. The mass of the film piece obtained by this cutting was taken to be w0. The film piece was immersed in 50 g of tetrahydrofuran (THF) for 24 hours. Thereafter, the film piece was pulled out of the THF, was vacuum dried at a temperature of 105°C for 3 hours, and the mass w1 of insoluble content was measured. The gel content was calculated using the following calculation formula.

$$\text{Gel content (mass\%)} = \text{w1/w0} \times 100$$

<Peel strength>

A negative electrode was cut out as a rectangle of 100 mm in length and 10 mm in width to obtain a test specimen. The test specimen was placed with the surface at which the negative electrode mixed material layer was present facing downward, cellophane tape (tape prescribed by JIS Z 1522) was affixed to the surface of the negative electrode mixed material layer, and then the stress when one end of the current collector was pulled and peeled off in a perpendicular direction at a pulling speed of 50 mm/min was measured (note that the cellophane tape was secured to a test stage). Three measurements were made in this manner. An average value of the measurements was determined, was taken to be the peel strength, and was evaluated by the following standard. A larger value for the peel strength indicates stronger close adherence of the negative electrode mixed material layer to the current collector.

A: Peel strength of 7.5 N/m or more
B: Peel strength of not less than 5.0 N/m and less than 7.5 N/m
C: Peel strength of not less than 3.0 N/m and less than 5.0 N/m

<Cycle characteristics>

A lithium ion secondary battery was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. The lithium ion secondary battery was subsequently discharged to a cell voltage of 2.75 V by a 0.2C constant-current method at a temperature of 25°C. Thereafter, CC-CV charging of the lithium ion secondary battery was performed by a 0.2C constant-current method (upper limit cell voltage: 4.30 V) and CC discharging of the lithium ion secondary battery was performed to 2.75 V by a 0.2C constant-current method.
The lithium ion secondary battery was subsequently discharged to a cell voltage of 2.75 V by a 0.1C constant-current method in an environment having a temperature of 25°C. Thereafter, 50 cycles of a charge/discharge operation were performed to 4.30 V with a 0.5C charge/discharge rate in a 45°C environment. The discharge capacity X1 of the 1st cycle (initial discharge capacity) and the discharge capacity X2 of the 50th cycle were measured, a capacity maintenance rate expressed by $\Delta C = (X2/X1) \times 100(\%)$ was calculated, and the capacity maintenance rate was evaluated by the following standard. A larger value for the capacity maintenance rate $\Delta C$ indicates that the secondary battery has better cycle characteristics.

A: $\Delta C$ of 85% or more
B: $\Delta C$ of not less than 80% and less than 85%
C: $\Delta C$ of not less than 75% and less than 80%

inhibition of swelling of negative electrode after cycling>

A lithium ion secondary battery obtained after evaluation of "cycle characteristics" described above was discharged to a cell voltage of 2.75 V with a 0.2C constant current and was subsequently CC-CV charged with a 1.0C constant current (upper limit cell voltage: 4.30 V) at a temperature of 25°C. The lithium ion secondary battery was dismantled to remove the negative electrode, and the thickness T1 of the negative electrode mixed material layer was measured using a thickness gauge. The thickness of the negative electrode mixed material layer prior to production of the lithium ion secondary battery was taken to be T0, a thickness change rate expressed by $\Delta T = \{(T1 - T0)/T0\} \times 100(\%)$ was calculated, and this thickness change rate was evaluated by the following standard. The rate of change of the thickness of the negative electrode expressed by $\Delta T$ reflects the contribution of increased thickness due to collapse of electrode plate structure during cycling and the like. A smaller value indicates lack of swelling of the negative electrode after cycling.

A: $\Delta T$ of less than 30%
B: $\Delta T$ of not less than 30% and less than 35%
C: $\Delta T$ of 35% or more

(Example 1)

<Production of binder composition for negative electrode>

«Preparation of water dispersion of styrene-butadiene polymer (SBR)»

A reactor was charged with 180 parts of deionized water, 25 parts of sodium dodecylbenzenesulfonate aqueous solution (concentration: 10%) as an emulsifier, 63 parts of styrene as an aromatic vinyl monomer, 4 parts of methacrylic acid as a carboxy group-containing monomer, and 0.3 parts of t-dodecyl mercaptan as a molecular weight modifier in this order. Next, gas inside of the reactor was purged three times with nitrogen, and then 33 parts of 1,3-butadiene was added into the reactor as an aliphatic conjugated diene monomer. The reactor was held at 10°C while 0.1 parts of cumene hydroperoxide was added thereto as a polymerization initiator so as to initiate a polymerization reaction that was then continued under stirring for 16 hours. Next, 0.1 parts of hydroquinone aqueous solution (concentration: 10%) was added as a polymerization inhibitor so as to end the polymerization reaction and yield a mixture containing a particulate binder. The mixture containing the particulate binder was adjusted to pH 8 through addition of 5% sodium hydroxide aqueous solution. Unreacted monomer was subsequently removed through thermal-vacuum distillation. Cooling was then performed to yield a water dispersion (solid content concentration: 40%) containing the particulate binder (SBR).

«Cross-linking»

The obtained water dispersion of the particulate binder was stirred while 1.5 parts (in terms of solid content) of a water dispersion of sulfur (colloidal sulfur; average particle diameter: not less than 0.5 μm and not more than 3 μm) as a sulfuric cross-linker, 1.5 parts (in terms of solid content) of a water dispersion of zinc dibutyldithiocarbamate as a vulcanization accelerator, and 1.5 parts (in terms of solid content) of a water dispersion of zinc oxide as an auxiliary vulcanization accelerator were added thereto per 100 parts of the particulate binder. After this addition, the water dispersion was heated in a 30°C constant-temperature tank for 5 days so as to cause a cross-linking reaction to progress and yield a water dispersion of a particulate binder having a cross-linked structure through bonding via sulfur.

«Purification»

The water dispersion of the particulate binder obtained after cross-linking was subjected to centrifugation using a centrifuge (produced by Eppendorf Himac Technologies Co., Ltd.; product name: CR21N) with an R10A3 rotor, a centrifugal acceleration of 4,380 ×g, and a rotation time of 1 hour, and unnecessary components were removed to obtain a binder composition. This binder composition was used to measure the amount of sediment, the proportion of sulfur, and the gel content of the particulate binder. The results are shown in Table 1.

<Production of slurry composition for negative electrode>

A planetary mixer was charged with 19.3 parts of $SiO_x$ (theoretical capacity: 2,400 mAh/g; volume-average particle diameter D50: 5 μm) as a silicon-based negative electrode active material, 77.2 parts of artificial graphite (theoretical capacity: 360 mAh/g; volume-average particle diameter D50: 23 μm; same applies below) as a carbon-based negative electrode active material, and 1.0 parts (in terms of solid content) of carboxymethyl cellulose (CMC) and 1.0 parts (in terms of solid content) of lithium polyacrylate as thickeners. These materials were diluted to a solid content concentration of 60% with deionized water and were subsequently kneaded at a rotation speed of 45 rpm for 60 minutes. Thereafter, 1.5 parts (in terms of solid content) of the binder composition for a negative electrode obtained as described above was added and was kneaded therewith at a rotation speed of 40 rpm for 40 minutes. Moreover, deionized water was added such that the viscosity (measured using B-type viscometer; temperature: 25°C; rotor speed: 60 rpm) was 3,000 ± 500 mPa·s to thereby produce a slurry composition for a negative electrode.

<Production of negative electrode>

The slurry composition for a negative electrode was applied onto the surface of copper foil of 20 μm in thickness serving as a current collector by a comma coater such as to have a coating weight of 5.8 mg/cm$^2$ to 6.2 mg/cm$^2$. The copper foil onto which the slurry composition for a negative electrode had been applied was conveyed inside an oven having a temperature of 80°C for 2 minutes and an oven having a temperature of 110°C for 2 minutes at a speed of 300 mm/min so as to dry the slurry composition on the copper foil and obtain a negative electrode web.
The obtained negative electrode web was pressed to a density of 1.63 g/cm$^3$ to 1.67 g/cm$^3$ by a roll press and was then left in an environment having a temperature of 105°C for 4 hours under vacuum conditions with the aim of moisture removal so as to obtain a negative electrode. The peel strength of this negative electrode was evaluated. The result is shown in Table 1.

<Production of positive electrode>

A slurry composition for a positive electrode was produced by loading 100 parts of LiCoO$_2$ as a positive electrode active material, 2 parts of acetylene black (HS-100 produced by Denka Company Limited) as a conductive material, and 2 parts of PVDF (polyvinylidene fluoride; KF-1100 produced by Kureha Corporation) as a binder into a planetary mixer, further adding 2-methylpyrrolidone as a dispersion medium to adjust the total solid content concentration to 67%, and mixing these materials.
The obtained slurry composition for a positive electrode was applied onto aluminum foil of 20 μm in thickness serving as a current collector by a comma coater such as to have a coating weight of 26.3 mg/cm$^2$ to 27.7 mg/cm$^2$. The aluminum foil onto which the slurry composition for a positive electrode had been applied was subsequently conveyed inside an oven having a temperature of 60°C for 2 minutes at a speed of 0.5 m/min so as to perform drying. Thereafter, 2 minutes of heat treatment was performed at a temperature of 120°C to obtain a positive electrode web.
The obtained positive electrode web was pressed to a density of 3.40 g/cm$^3$ to 3.50 g/cm$^3$ by a roll press and was then left in an environment having a temperature of 120°C for 3 hours under vacuum conditions with the aim of dispersion medium removal so as to obtain a positive electrode.

<Production of secondary battery>

A wound cell (discharge capacity equivalent to 800 mAh) was produced using a single-layer separator made from polypropylene and the aforementioned negative and positive electrodes and was arranged inside an aluminum packing material. The aluminum packing material was subsequently filled with a LiPF$_6$ solution of 1.0 M in concentration (solvent: mixed solvent of ethylene carbonate (EC)/ethyl methyl carbonate (EMC) = 3/7 (volume ratio); additive: containing 2 volume% (solvent ratio) of vinylene carbonate) as an electrolyte solution. The aluminum packing material was then closed by heat sealing at a temperature of 150°C to tightly seal up an opening of the aluminum packing material, and thereby produce a lithium ion secondary battery. This lithium ion secondary battery was used to evaluate cycle characteristics and inhibition of negative electrode swelling after cycling. The results are shown in Table 1.

(Example 2)

A binder composition for a negative electrode, a slurry composition for a negative electrode, a negative electrode, a positive electrode, and a secondary battery were produced and various evaluations were performed in the same way as in Example 1 with the exception that the particulate binder obtained after cross-linking was purified as described below in production of the binder composition for a negative electrode. The results are shown in Table 1.

«Purification»

The water dispersion of the particulate binder obtained after cross-linking was left at rest for 24 hours. After this resting, the water dispersion had separated into two layers (upper layer: water dispersion of particulate binder; lower layer: sediment). The lower layer was removed to obtain a binder composition.

(Example 3)

A binder composition for a negative electrode, a slurry composition for a negative electrode, a negative electrode, a positive electrode, and a secondary battery were produced and various evaluations were performed in the same way as in Example 1 with the exception that the water dispersion of a particulate binder obtained after cross-linking was used as the binder composition for a negative electrode without purification in production of the binder composition for a negative electrode. The results are shown in Table 1.

(Example 4)

A binder composition for a negative electrode, a slurry composition for a negative electrode, a negative electrode, a positive electrode, and a secondary battery were produced and various evaluations were performed in the same way as in Example 1 with the exception that cross-linking and purification were performed using polyisoprene (IR) instead of SBR in production of the binder composition for a negative electrode. The results are shown in Table 1.
Note that a water dispersion of IR was produced by the following procedure.

«Preparation of water dispersion of polyisoprene (IR)»

[Production of toluene solution of IR]

Isoprene rubber (produced by Zeon Corporation; product name: Nipol IR2200) was dissolved in toluene to prepare an isoprene rubber solution of 10% in concentration.

[Emulsification]

A mixture of sodium linear alkylbenzene sulfonate, sodium alkyl polyoxyethylene sulfonate, and sodium alkyl polyoxyethylene sulfosuccinate mixed in a ratio of 1:1:1 was dissolved in deionized water to produce an aqueous solution having a total solid content concentration of 1.5%.
A tank was charged with 500 g of the isoprene rubber solution and 500 g of the aqueous solution, and preliminary mixing of these materials was performed by stirring. Next, the resultant preliminary mixture was transferred from inside of the tank to a Milder (produced by Pacific Machinery & Engineering Co., Ltd.; product name: MDN303V) at a rate of 100 g/min using a metering pump and was stirred at a rotation speed of 20,000 rpm to cause emulsification.
Next, toluene in the resultant emulsion was evaporated under reduced pressure in a rotary evaporator, 30 minutes of centrifugation was subsequently performed at 7,000 rpm in a centrifuge (CR21N produced Eppendorf Himac Technologies Co., Ltd.), and the upper layer portion was withdrawn to thereby perform concentrating.
Finally, the upper layer portion was filtered through a 100-mesh screen to yield a water dispersion containing IR that had been formed into particles.

[Graft polymerization]

The obtained water dispersion of IR was diluted through addition of distilled water such that the amount of water was 850 parts relative to 100 parts (in terms of solid content) of the particles of IR. The diluted water dispersion of IR was loaded into a stirrer-equipped polymerization reactor that had undergone nitrogen purging and was heated to a temperature of 30°C under stirring. In addition, a separate vessel was used to produce a diluted methacrylic acid solution by mixing 4 parts of methacrylic acid as a carboxy group-containing monomer and 15 parts of distilled water. The diluted methacrylic acid solution was added over 30 minutes, into the polymerization reactor that had been heated to 30°C, so as to add 4 parts of methacrylic acid relative to 100 parts of IR.
A separate vessel was also used to produce a solution containing 7 parts of distilled water and 0.01 parts of ferrous sulfate (produced by Chubu Chelest Co., Ltd.; product name: FROST Fe) as a reductant. The obtained solution was added into the polymerization reactor, 0.5 parts of 1,1,3,3-tetramethylbutyl hydroperoxide (produced by NOF Corporation; product name: PEROCTA H) was subsequently added as an oxidant, and a reaction was performed at 30°C for 1 hour and then at 70°C for 2 hours. In this manner, methacrylic acid was graft polymerized with the IR that had been formed into particles to yield a water dispersion of IR. The polymerization conversion rate was 99%.

[Microfiltration]

The obtained water dispersion of IR was diluted to a solid content concentration of 10% through addition of deionized water. The diluted water dispersion of IR was then adjusted to pH 8.0 through addition of 5% sodium hydroxide aqueous solution. After loading 1,500 g of the pH adjusted binder composition into a vessel (feedstock vessel) connected to the following system, the binder composition was subjected to microfiltration under conditions indicated below while being circulated using a metering pump.

System: Microza Pencil Module-type Module Tabletop Filtration Unit PX-02001 (produced by Asahi Kasei Corporation)
Filtration membrane: Microza USP-043 (pore diameter: 0.1 $\mu$m)
Circulation flow rate: 1,000 g/min

The microfiltration was continued for 30 hours while supplementing water into the feedstock vessel in an amount corresponding to the weight of permeate discharged outside of the system (outside of the filtration membrane). Liquid present inside the feedstock vessel after this microfiltration was collected as a purified water dispersion of IR.

(Example 5)

A binder composition for a negative electrode, a slurry composition for a negative electrode, a negative electrode, a positive electrode, and a secondary battery were produced and various evaluations were performed in the same way as in Example 1 with the exception that cross-linking and purification were performed using a styrene-butadiene-styrene block copolymer (SBS) instead of SBR in production of the binder composition for a negative electrode. The results are shown in Table 1.
Note that a water dispersion of SBS was produced by the following procedure.

«Preparation of water dispersion of styrene-butadiene-styrene block copolymer (SBS)»

[Production of cyclohexane solution of block copolymer]

A pressure-resistant reactor was charged with 233.3 kg of cyclohexane, 54.2 mmol of N,N,N',N'-tetramethylethylenediamine (hereinafter, referred to as "TMEDA"), and 30.0 kg of styrene as an aromatic vinyl monomer. These materials were stirred at 40°C while 1806.5 mmol of n-butyllithium was added thereto as a polymerization initiator, and then 1 hour of polymerization was performed under heating to 50°C. The polymerization conversion rate of styrene was 100%. Next, 70.0 kg of 1,3-butadiene as an aliphatic conjugated diene monomer was continuously added into the pressure-resistant reactor over 1 hour while performing temperature control to maintain a temperature of 50°C to 60°C. The polymerization reaction was continued for 1 hour more after addition of the 1,3-butadiene was complete. The polymerization conversion rate of 1,3-butadiene was 100%.
Next, 722.6 mmol of dichlorodimethylsilane was added into the pressure-resistant reactor as a coupling agent and a coupling reaction was carried out for 2 hours to form a styrene-butadiene coupled block copolymer. Thereafter, 3612.9 mmol of methanol was added to the reaction liquid and was thoroughly mixed therewith to deactivate active ends. Next, 0.05 parts of 4-[[4,6-bis(octylthio)-1,3,5-triazin-2-yl]amino]-2,6-di-tert-butylphenol as a hindered phenol antioxidant and 0.09 parts of 3,9-bis(octadecyloxy)-2,4,8,10-tetraoxa-3,9-diphosphaspiro[5.5]undecane as a phosphite antioxidant were added to 100 parts of the reaction liquid (containing 30.0 parts of polymer component) and were mixed therewith. The resultant mixed solution was gradually added dropwise to hot water of 85°C to 95°C to cause volatilization of solvent and obtain a precipitate. The precipitate was pulverized and then hot-air dried at 85°C to collect a dried product containing a block copolymer.
The collected dried product was dissolved in cyclohexane to produce a cyclohexane solution of the block copolymer having a block copolymer concentration of 5.0%.

[Emulsification]

Sodium alkylbenzene sulfonate was dissolved in deionized water to produce a 0.15% aqueous solution.
After loading 1,000 g of the obtained block copolymer solution and 1,400 g of the obtained aqueous solution into a tank, these solutions were stirred to perform preliminary mixing and thereby obtain a preliminary mixture. Next, the preliminary mixture was transferred from inside of the tank to a highpressure emulsifying/dispersing device "LAB 1000" (produced by SPX FLOW, Inc.) using a metering pump and was circulated (number of passes: 5) so as to obtain an emulsion in which the preliminary mixture had undergone phase-inversion emulsification.

Next, cyclohexane and water in the obtained emulsion were evaporated under reduced pressure in a rotary evaporator.

Finally, filtration was performed through a 100-mesh screen to yield a water dispersion (block copolymer latex) containing a block copolymer that had been formed into particles.

[Graft polymerization]

The obtained block copolymer latex was diluted through addition of distilled water such that the amount of water was 850 parts relative to 100 parts (in terms of solid content) of particles of the block copolymer. The diluted block copolymer latex was loaded into a stirrer-equipped polymerization reactor that had undergone nitrogen purging and was heated to a temperature of 30°C under stirring. In addition, a separate vessel was used to produce a diluted methacrylic acid solution by mixing 4 parts of methacrylic acid as an acidic group-containing monomer and 15 parts of distilled water. The diluted methacrylic acid solution was added over 30 minutes, into the polymerization reactor that had been heated to 30°C, so as to add 4 parts of methacrylic acid relative to 100 parts of the block copolymer.

A separate vessel was also used to produce a solution containing 7 parts of distilled water and 0.01 parts of ferrous sulfate (produced by Chubu Chelest Co., Ltd.; product name: FROST Fe) as a reductant. The obtained solution was added into the polymerization reactor, 0.5 parts of 1,1,3,3-tetramethylbutyl hydroperoxide (produced by NOF Corporation; product name: PEROCTA H) was subsequently added as an oxidant, and a reaction was performed at 30°C for 1 hour and then at 70°C for 2 hours. In this manner, methacrylic acid was graft polymerized with the block copolymer that had been formed into particles to yield a water dispersion of SBS. The polymerization conversion rate was 99%.

[Microfiltration]

The obtained water dispersion of SBS was diluted to a solid content concentration of 10% through addition of deionized water. The diluted water dispersion of SBS was then adjusted to pH 8.0 through addition of 5% sodium hydroxide aqueous solution. After loading 1,500 g of the pH adjusted binder composition into a vessel (feedstock vessel) connected to the following system, the binder composition was subjected to microfiltration under conditions indicated below while being circulated using a metering pump.

System: Microza Pencil Module-type Module Tabletop Filtration Unit PX-02001 (produced by Asahi Kasei Corporation)
Filtration membrane: Microza USP-043 (pore diameter: 0.1 $\mu$m)
Circulation flow rate: 1,000 g/min

The microfiltration was continued for 30 hours while supplementing water into the feedstock vessel in an amount corresponding to the weight of permeate discharged outside of the system (outside of the filtration membrane). Liquid present inside the feedstock vessel after this microfiltration was collected as a purified water dispersion of SBS.

(Example 6)

A binder composition for a negative electrode, a slurry composition for a negative electrode, a negative electrode, a positive electrode, and a secondary battery were produced and various evaluations were performed in the same way as in Example 1 with the exception that the reaction time during cross-linking was changed from 5 days to 1 day in production of the binder composition for a negative electrode. The results are shown in Table 1.

(Comparative Example 1)

A slurry composition for a negative electrode, a negative electrode, a positive electrode, and a secondary battery were produced and various evaluations were performed in the same way as in Example 1 with the exception that a binder composition for a negative electrode produced as described below was used. The results are shown in Table 1.

<Production of binder composition for negative electrode>

<<Preparation of water dispersion of styrene-butadiene polymer (SBR)>>

A water dispersion (solid content concentration: 40%) containing a particulate binder (SBR) was obtained in the same way as in Example 1.

«Cross-linking»

The obtained water dispersion of the particulate binder was stirred while 2.0 parts (in terms of solid content) of a water dispersion of benzoyl peroxide was added thereto per 100 parts of the particulate binder. After this addition, the water dispersion was heated in a 30°C constant-temperature tank for 5 days so as to cause a cross-linking reaction to progress and yield a water dispersion of a particulate binder having a cross-linked structure. This water dispersion was used as a binder composition for a negative electrode.

(Comparative Example 2)

A slurry composition for a negative electrode, a negative electrode, a positive electrode, and a secondary battery were produced and various evaluations were performed in the same way as in Example 1 with the exception that a binder composition for a negative electrode produced as described below was used. The results are shown in Table 1.

<Production of binder composition for negative electrode>

A reactor was charged with 180 parts of deionized water, 25 parts of sodium dodecylbenzenesulfonate aqueous solution (concentration: 10%) as an emulsifier, 63 parts of styrene as an aromatic vinyl monomer, 2 parts of methacrylic acid as a carboxy group-containing monomer, 2 parts of N-methylolacrylamide as a cross-linkable monomer (cross-linker), and 0.3 parts of t-dodecyl mercaptan as a molecular weight modifier in this order. Next, gas inside of the reactor was purged three times with nitrogen, and then 33 parts of 1,3-butadiene was added into the reactor as an aliphatic conjugated diene monomer. The reactor was held at 10°C while 0.1 parts of cumene hydroperoxide was added thereto as a polymerization initiator so as to initiate a polymerization reaction that was then continued under stirring for 16 hours. Next, 0.1 parts of hydroquinone aqueous solution (concentration: 10%) was added as a polymerization inhibitor so as to end the polymerization reaction and yield a mixture containing a particulate binder. The mixture containing the particulate binder was adjusted to pH 8 through addition of 5% sodium hydroxide aqueous solution. Unreacted monomer was subsequently removed through thermal-vacuum distillation. Cooling was then performed to yield a water dispersion (solid content concentration: 40%) containing the particulate binder (SBR). This water dispersion was used as a binder composition for a negative electrode.

(Comparative Example 3)

A slurry composition for a negative electrode, a negative electrode, a positive electrode, and a secondary battery were produced and various evaluations were performed in the same way as in Example 1 with the exception that a binder composition for a negative electrode produced as described below was used. The results are shown in Table 1.

<Production of binder composition for negative electrode>

«Preparation of water dispersion of styrene-butadiene polymer (SBR)»

A water dispersion (solid content concentration: 40%) containing a particulate binder (SBR) was obtained in the same way as in Example 1.

«Cross-linking»

The obtained water dispersion of the particulate binder was stirred while 2.2 parts (in terms of solid content) of a water dispersion of sulfur (colloidal sulfur; average particle diameter: not less than 0.5 $\mu$m and not more than 3 $\mu$m) as a sulfuric cross-linker, 2.2 parts (in terms of solid content) of a water dispersion of zinc dibutyldithiocarbamate as a vulcanization accelerator, and 2.2 parts (in terms of solid content) of a water dispersion of zinc oxide as an auxiliary vulcanization accelerator were added thereto per 100 parts of the particulate binder. After this addition, the water dispersion was heated in a 30°C constant-temperature tank for 5 days so as to cause a cross-linking reaction to progress and yield a water dispersion of a particulate binder having a cross-linked structure through bonding via sulfur. This water dispersion was used as a binder composition for a negative electrode.

(Comparative Example 4)

A binder composition for a negative electrode, a slurry composition for a negative electrode, a negative electrode, a positive electrode, and a secondary battery were produced and various evaluations were performed in the same way as in Example 1 with the exception that the water dispersion of the particulate binder (SBR) obtained after removal of unreacted monomer was used as the binder composition for a negative electrode without performing cross-linking and purification in production of the binder composition for a negative electrode. The results are shown in Table 1.

Table 1

| | | | | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|---|---|
| Slurry composition | Binder composition | Particulate binder | Used cross-linker | Colloidal sulfur | Colloidal sulfur | Colloidal sulfur | Colloidal sulfur | Colloidal sulfur | Colloidal sulfur | Benzoyl peroxide | N-Methylol acrylamide | Colloidal sulfur | - |
| | | | Type | SBR | SBR | SBR | IR | SBS | SBR | SBR | SBR | SBR | SBR |
| | | | Gel content [mass%] | 95.0 | 95.0 | 95.0 | 95.0 | 95.0 | 60.0 | 95.0 | 95.0 | 95.0 | 25.0 |
| | | Proportion of sulfur [mass%] | | 0.2 | 1.4 | 2.0 | 0.2 | 0.2 | 0.2 | 0.0 | 0.0 | 2.9 | 0.0 |
| | | Amount of sediment [parts by mass] | | 0.3 | 2.4 | 4.3 | 0.3 | 0.3 | 0.3 | 0.0 | 0.0 | 6.0 | 0.0 |
| | Negative electrode active material | Silicon-based | Type | $SiO_x$ | $SiO_x$ | $SiO_x$ | $SiO_x$ | $SiO_x$ | $SiO_x$ | $SiO_x$ | $SiO_x$ | $SiO_x$ | $SiO_x$ |
| | | | Proportion [mass%] | 20 | 20 | 20 | 20 | 20 | 20 | 20 | 20 | 20 | 20 |
| Peel strength | | | | A | A | A | A | A | A | C | C | A | C |
| Cycle characteristics | | | | A | A | B | A | A | B | B | B | C | C |
| Inhibition of swelling | | | | A | A | A | A | A | B | B | B | A | C |

It can be seen from Table 1 that a negative electrode having excellent peel strength and low tendency to swell after cycling and a secondary battery having excellent cycle characteristics are obtained in Examples 1 to 6.

It can also be seen from Table 1 that peel strength of a negative electrode decreases in Comparative Examples 1 and 2 in which a particulate binder having a cross-linked structure through bonding that is not via sulfur is used.

Moreover, it can be seen from Table 1 that cycle characteristics of a secondary battery deteriorate in Comparative Example 3 in which the amount of sediment is 5.0 parts by mass or more relative to 100 parts by mass of all solid content.

Furthermore, it can be seen from Table 1 that peel strength of a negative electrode decreases, cycle characteristics of a secondary battery deteriorate, and swelling of a negative electrode after cycling cannot be sufficiently inhibited in Comparative Example 4 in which a particulate binder that does not have a cross-linked structure is used.

INDUSTRIAL APPLICABILITY

According to the present disclosure, it is possible to provide a binder composition for a non-aqueous secondary battery negative electrode and a slurry composition for a non-aqueous secondary battery negative electrode with which it is possible to form a negative electrode having excellent peel strength and low tendency to swell after cycling and a secondary battery having excellent cycle characteristics.

Moreover, according to the present disclosure, it is possible to provide a negative electrode for a non-aqueous secondary battery that has excellent peel strength while also causing a secondary battery to display excellent cycle characteristics and having low tendency to swell after cycling.

Furthermore, according to the present disclosure, it is possible to provide a non-aqueous secondary battery having excellent cycle characteristics.

**Claims**

1. A binder composition for a non-aqueous secondary battery negative electrode comprising a particulate binder and a dispersion medium, wherein

   the particulate binder has a cross-linked structure through bonding via sulfur, and
   an amount of sediment obtained upon centrifugation of the binder composition for a non-aqueous secondary battery negative electrode at a rotation speed of 110,000 rpm is less than 5.0 parts by mass when an amount of all solid content contained in the binder composition for a non-aqueous secondary battery negative electrode is taken to be 100 parts by mass.

2. The binder composition for a non-aqueous secondary battery negative electrode according to claim 1, wherein a proportion constituted by sulfur among all solid content is 0.1 mass% or more.

3. The binder composition for a non-aqueous secondary battery negative electrode according to claim 1 or 2, wherein the particulate binder includes an aliphatic conjugated diene monomer unit.

4. The binder composition for a non-aqueous secondary battery negative electrode according to any one of claims 1 to 3, wherein the particulate binder has a gel content of not less than 40.0 mass% and not more than 99.5 mass%.

5. A slurry composition for a non-aqueous secondary battery negative electrode comprising: a negative electrode active material; and the binder composition for a non-aqueous secondary battery negative electrode according to any one of claims 1 to 4.

6. The slurry composition for a non-aqueous secondary battery negative electrode according to claim 5, wherein the negative electrode active material includes a silicon-based negative electrode active material.

7. The slurry composition for a non-aqueous secondary battery negative electrode according to claim 6, wherein a proportion constituted by the silicon-based negative electrode active material among the negative electrode active material is not less than 1 mass% and not more than 50 mass%.

8. A negative electrode for a non-aqueous secondary battery comprising a negative electrode mixed material layer formed using the slurry composition for a non-aqueous secondary battery negative electrode according to any one of claims 5 to 7.

9. A non-aqueous secondary battery comprising a positive electrode, a negative electrode, a separator, and an electrolyte solution, wherein the negative electrode is the negative electrode for a non-aqueous secondary battery according to claim 8.

## INTERNATIONAL SEARCH REPORT

| International application No. |
| --- |
| **PCT/JP2021/033206** |

### A. CLASSIFICATION OF SUBJECT MATTER

*H01M 4/48*(2010.01)i; *H01M 4/62*(2006.01)i; *H01M 10/0566*(2010.01)i
FI:   H01M4/62 Z; H01M10/0566; H01M4/48

According to International Patent Classification (IPC) or to both national classification and IPC

### B. FIELDS SEARCHED

Minimum documentation searched (classification system followed by classification symbols)

H01M4/48; H01M4/62; H01M10/0566

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 11-97024 A (DENSO CORP) 09 April 1999 (1999-04-09)<br>paragraphs [0008]-[0009], [0011], [0014], [0019] | 1-9 |
| A | JP 2015-008069 A (TOYOTA IND CORP) 15 January 2015 (2015-01-15)<br>paragraphs [0003], [0008], [0011]-[0013] | 1-9 |
| A | JP 2017-103212 A (SUMITOMO RUBBER IND) 08 June 2017 (2017-06-08)<br>paragraphs [0008], [0010], [0044] | 1-9 |
| A | WO 2013/146916 A1 (ZEON CORPORATION) 03 October 2013 (2013-10-03)<br>paragraphs [0024], [0029], [0038]-[0039], [0050], [0069], [0077], [0080] | 1-9 |

☐ Further documents are listed in the continuation of Box C.   ☑ See patent family annex.

| | |
| --- | --- |
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **05 November 2021** | **22 November 2021** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2021/033206**

| Patent document cited in search report | | | Publication date (day/month/year) | Patent family member(s) | Publication date (day/month/year) |
|---|---|---|---|---|---|
| JP | 11-97024 | A | 09 April 1999 | (Family: none) | |
| JP | 2015-008069 | A | 15 January 2015 | (Family: none) | |
| JP | 2017-103212 | A | 08 June 2017 | US 2017/0149063 A1 paragraphs [0007], [0009], [0043] US 2019/0198877 A1 EP 3171429 A1 KR 10-2017-0058850 A CN 106935810 A TW 201719956 A | |
| WO | 2013/146916 | A1 | 03 October 2013 | US 2015/0086875 A1 paragraphs [0034], [0039], [0050]-[0051], [0063], [0086], [0094], [0100] KR 10-2015-0002589 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016181422 A
- WO 2019003744 A1

- JP 2012204303 A